Europäisches Patentamt

(19) European Patent Office

Office européen des brevets

(11) Publication number: **0 058 791**
**A1**

# (12) EUROPEAN PATENT APPLICATION

(21) Application number: 81300780.4

(22) Date of filing: 25.02.81

(51) Int. Cl.³: **H 02 K 21/24,** H 02 K 21/12

(43) Date of publication of application: 01.09.82
Bulletin 82/35

(84) Designated Contracting States: **AT BE CH DE FR IT LI LU NL SE**

(71) Applicant: **Winterbotham, Harold, Fern Howe Braithwaite, Keswick Cumbria CA12 5SZ (GB)**

(72) Inventor: **Winterbotham, Harold, Fern Howe Braithwaite, Keswick Cumbria CA12 5SZ (GB)**

(74) Representative: **Ellis, Edward Lovell et al, MEWBURN ELLIS & CO. 2/3 Cursitor Street, London EC4A 1BQ (GB)**

(54) Electrical rotating machines.

(57) An improved class of electrical rotating machines, suitable as generators or motors, utilizes the "air gap" principle (conductors in the air gap rather than wound on an iron core) and has advantages particularly in generating electricity form natural sources such as wind.

One embodiment of a machine of this type has a box girder rotor construction (22) carrying at its outer circumferential section (28) a plurality of equispaced pairs of carrier members (36). The carrier members (36) support permanent magnets (34) to define an air-gap in which there is located a plurality of interleaved coils (50 being electrically interconnected in two sets, the active portions of the coils all lying in the same plane within the air-gap. The outer headspool portions (54) of the coils are cast in sections in epoxy resin and mounted on a stator support (44). A cover (42) is secured to the rotor structure (22) to rotate therewith and has a downwardly projecting peripheral portion (43).

A second embodiment utilizes an octagonal type of construction.

In a third alternative form the machine is constructed in cylindrical form rather than disc shaped, the magnetic flux being in the radial direction rather than the axial direction.

- 1 -

"Electrical Rotating Machines".
-------------------------------------------

The present invention relates to electrical rotating machines and in particular to that type of machine in which the conductors interacting with the magnetic flux are suspended in an air gap and not wound round an iron core.

The advantage of the air gap type of generator over the more conventional type is high efficiency, maintained over a wide range of speed, as compared with an efficiency which is high only at the design speed, falling off rapidly at both higher and lower speeds. This is because the mechanical energy moves conductors directly across the lines of magnetic flux, without the interposition of an alternating flux in iron. The latter introduces hysteresis losses, greatly increases the self-inductance of the windings, thereby limiting the current which can flow in response to the induced EMF, and introduces a non-linearity of characteristics which is due to the fact that the intensity of the magnetic flux is not a linear function of the magnetizing current. In addition, air gap generators may be designed to have very small eddy-current losses and minimum field weakening due to load current. In the conventional type of alternator the load current induces a magnetic field in the iron core which opposes the inducing magnetic field and thus weakens it. This effect considerably limits the output of conventional permanent magnet alternators.

Air gap alternators are thus far better suited to natural power applications in which both power and speed vary rapidly and unpredictably over a wide range and this is particularly the case for permanent magnet alternators.

However, the power handling capacity of air gap generators tends to be limited by the low flux density available in a large air gap.

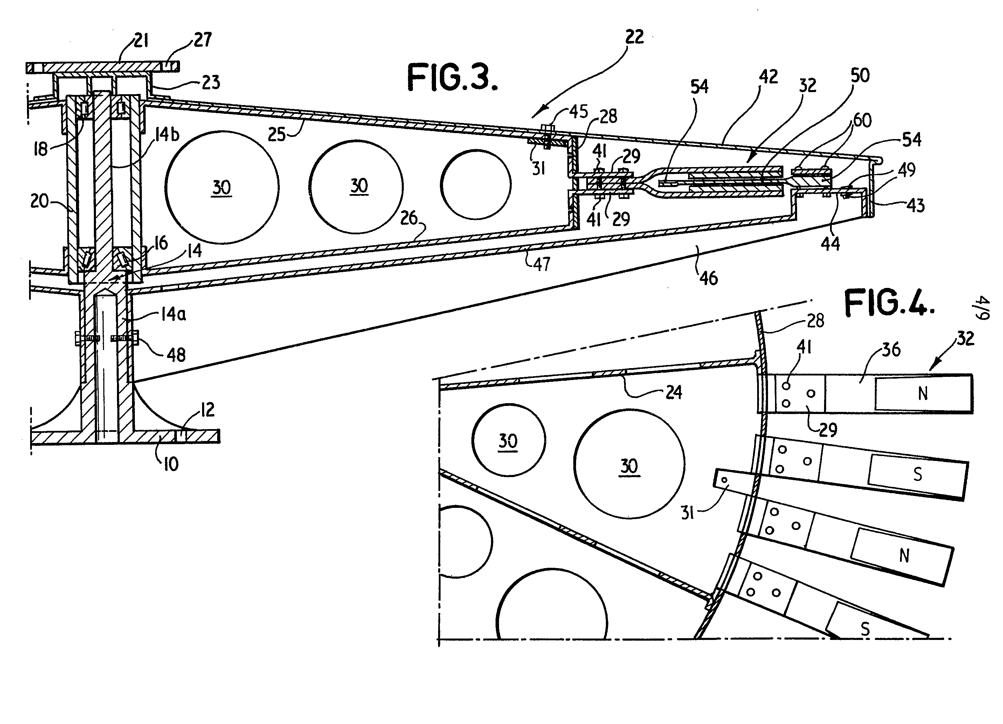

A known machine of this type is disclosed in Figure 2 of British Patent Specification No. 1,491,026. The axial air gap synchronous dynamo-electric machine disclosed therein essentially comprises:-

(a) permanent magnets arranged on one structural component of the machine, these magnets being oriented magnetically in an axial direction and spaced apart in an annular array on an axis coinciding with the common axis of the machine such that alternate north and south pole faces lie in an annular surface;

(b) overlapping coils arranged in an annular array on the other structural component of the machine, the coils being bonded together to form a discoidal winding structure having an annular disc portion containing the coil sides and inner and outer headspool portions, each one of the coils having its sides generally radial and at a coil span of approximately one pole pitch; and

(c) first and second magnetic structures, the first of which is located on said one structural component and magnetically linked with the permanent magnets, and the second of which is located on the other side of the winding disc, being in the form of a second arrangement of permanent magnets on the other side of an air gap such that the winding structure is sandwiched between two permanent magnet rotor structures.

In this form of construction the rotor consists of two mild steel discs with a relatively small number of permanent magnets of alternating and complementary polarity, elongated in the circumferential direction, affixed to their oppositing surfaces so as to define an air gap. The magnetic flux crosses this gap axially and the magnetic circuit is completed circumferentially in the discs.

The winding consists of a number of bundles of wire cemented together to form a unitary discoidal structure with a thin part in the air gap and thicker outer and inner rims where the bundles overlap.

Such a construction implies that the design speed is high. Size is limited by the general discoidal construction and high technology manufacture (similar to that required for the manufacture of conventional

- 4 -

electrical machines) will be required.

It is an object of this invention to provide a novel class of air gap machines which preserve all the advantages of the type, and which may be of any size with equal facility, have good power performance at low rotational speeds and may be manufactured by low precision technology. Machines of this class are particularly, but not exclusively, applicable to the generation of electricity from natural sources, such as the wind. They are indifferent to direction of rotation and may with equal efficiency be used as motors.

According to this invention there is provided an electrical rotating machine having:

a first part carrying an even number of functionally separate and identical magnet assemblies arranged in equi-spaced relation around a circumferential zone of a circle; a second part carrying an even number of functionally separate and identical coil assemblies similarly arranged around the circumferential zone of a circle; and means to rotate at least one part relative to the other part; characterized in that:-

firstly, the magnet assemblies each comprise: two magnet poles separated by an air gap, the pole surfaces of said magnet assemblies all lying upon and defining a single annular volume, the polarities of the magnet assemblies alternating around the circle; means to complete the magnetic circuit between opposing pole surfaces;

- 5 -

secondly, the coil assemblies each comprise: a number of turns of strip metal wound in a spiral manner with the major dimension of the strips in contact to form a flat single layer coil, the coils thus formed being encapsulated singly or in groups in an insulating material to form rigid structures; and means for fixing the coil assemblies to the second part of the machine so that a substantial major part of each coil lies within the air gap, the coil assemblies being electrically connected in the correct sense to provide one or more outputs; and

thirdly the number of the coil assemblies is equal to or greater than the number of pairs of magnet assemblies such that in each pole pitch the arrangement of coils is identical.

The magnet assemblies may be energized by permanent or electro-magnets.

The magnet structures may be arranged such that the direction of the magnetic flux in the air gap may be axial or radial (these terms referring to the axis of rotation of the machine).

The magnet structures in one form are rectangular and elongated in the radial or axial directions respectively. In an alternative form the magnet air gap faces are shaped so as to produce a substantially sinusoidal flux distribution in the air gap.

Each coil assembly preferably comprises substantially straight active portions within the air gap and substantially arcuate headspool portions which may be inside or outside the air gap.

The coil assemblies may be provided in two separate sets, the two sets of coil assemblies being superimposed so as to provide two separate equal electrical outputs in the case where the machine is used as a generator.

The present invention will now be described in greater detail by way of examples with reference to the accompanying drawings, wherein:-

Figures 1A to 1F are diagrammatic views of alternative arrangements of coil and magnet assemblies;

Figure 2 is an elevation view of a first embodiment of an electrical generator using the arrangement of Figure 1D;

Figure 3 is a part cross-sectional view of the machine shown in Figure 2;

Figure 4 is a plan view of the rotor construction of the same;

Figures 5A and 5B are respectively a cross-sectional elevation and a plan of one of the permanent magnet assemblies;

Figure 6 shows a stator coil assembly;

Figures 7A and 7B are respectively a plan and an elevation view of a coil unit;

Figures 8A and 8B are respectively a partial plan view and a partial cross-sectional elevation of a second embodiment of an electrical generator using the coil arrangement of Figure 1A; and

Figures 9A and 9B are respectively a diagrammatic plan view and elevation view (partly sectioned on line A-A) of a third embodiment of an electrical generator in which the magnetic flux is in the radial direction.

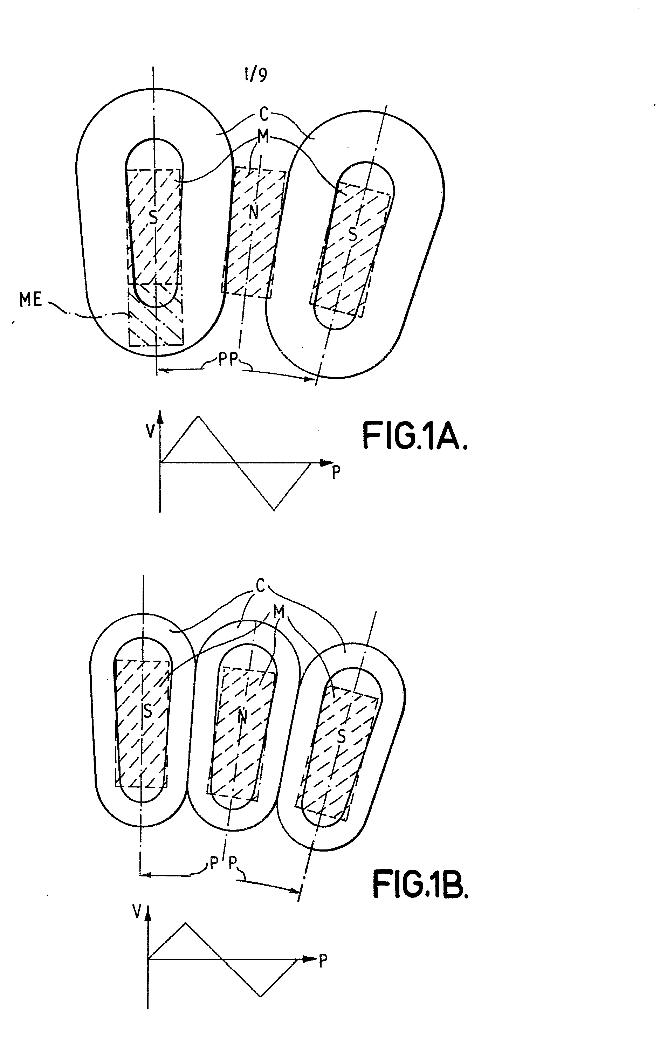

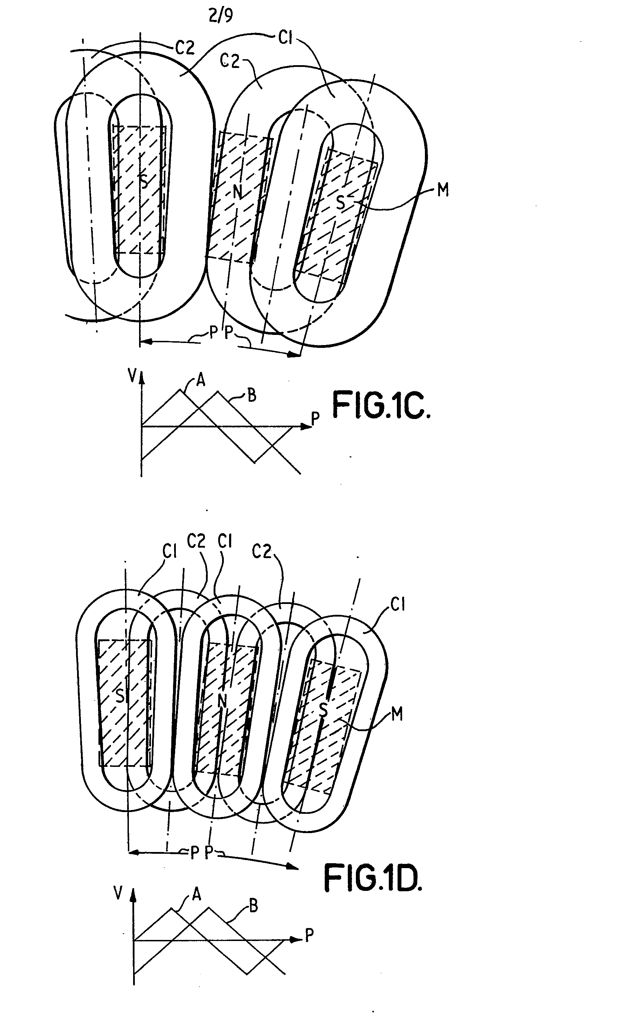

Referring first to Figures 1A to 1F, these diagrams show six different configurations of coils C and magnet pole areas M. The coils C are denoted by full lines and the magnet areas M by dotted lines and it is to be understood that the one is rotating with regard to the other in the plane of the paper, the direction of the magnetic flux being perpendicular to the paper. All diagrams are to the same scale, and all configurations are appropriate to a machine of the same size with 24 pairs of poles, one pole pitch PP being the distance between the centres of magnet pole areas of the same polarity (e.g. south as shown in Figures 1A to 1F). The induced EMF waveforms are also shown to the same voltage scale, in which voltage V is plotted to a base of the pole pitch P.

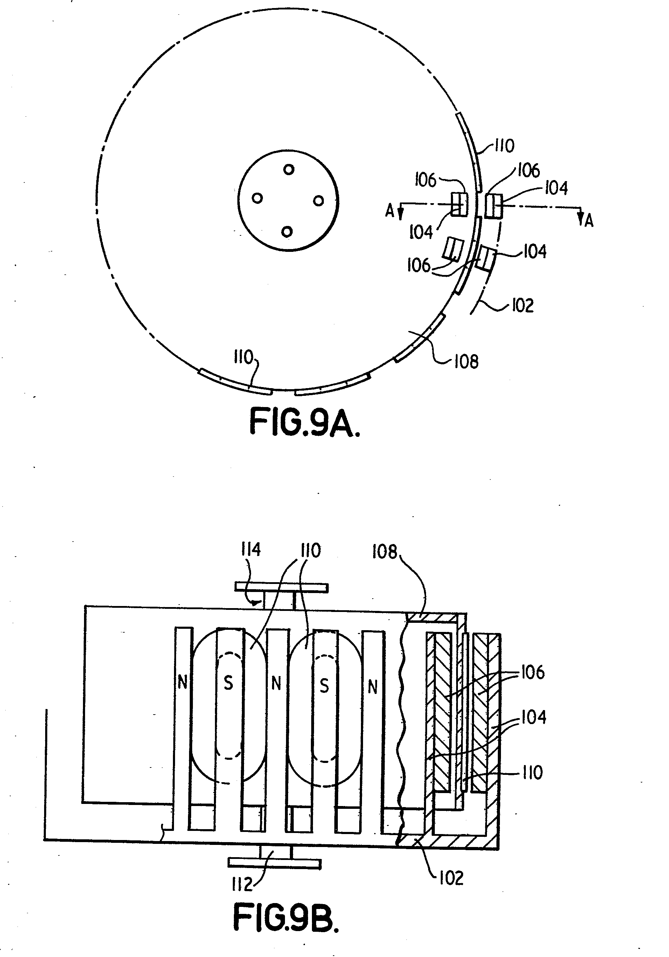

These diagrams illustrate the case in which the coils lie in the radial/circumferential plane with the magnetic flux in the axial direction, consequently their shape is slightly tapered inwards. In the alternative case in which the coils lie on the surface of a cylinder whose axis is the axis of rotation, the coils will be of uniform width.    This case is illustrated in Figures 9A and 9B to be described hereinafter.

The radial dimension of the magnet areas is the same in all six cases;    this dimension should be as large as practicable consistent with adequate rigidity of the coil assemblies, to increase the ratio of active to inactive length of conductors.    In these cases the radial extension is $2\frac{1}{2}$ times the magnet area width.

The configurations of coils C and magnets M may be varied within limits to suit the requirements.

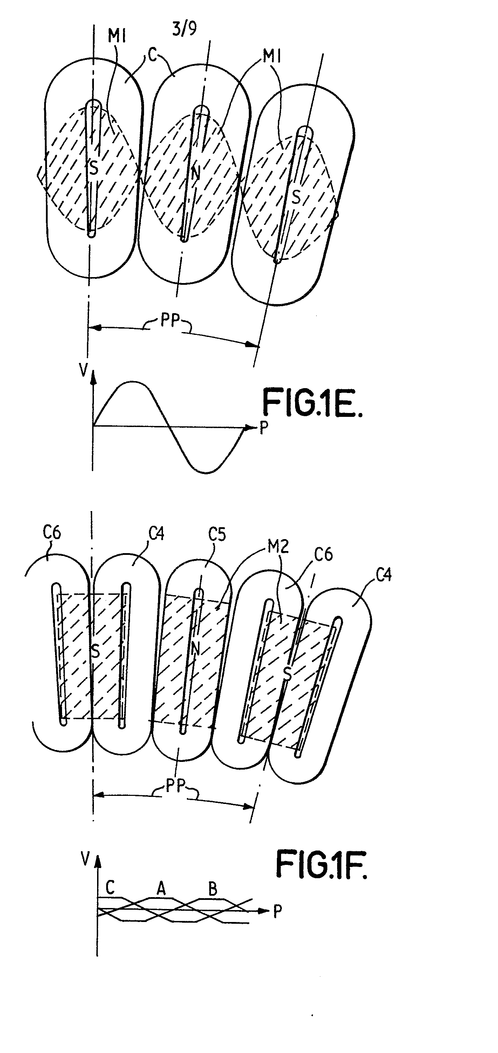

The number of magnet poles per pole pitch is 2 by definition.    The shape of a pole may be rectangular segmental or of other special shape.    The former is convenient and usual.    Segmental shapes are expensive to make and do not provide commensurate advantage. Special shapes may be used to control the output waveform; an example is shown in Figure 1E.    The angular width of poles may vary from $\frac{1}{4}$ to $\frac{1}{2}$ a pole pitch.

There may be one or several coils per pole pitch.    Each may be fully wound from the centre or centre line to the outer edge, or there may be a central opening.    The coil shape will usually be segmental with two straight sections of uniform width between the magnet poles.    The two connective sides will be curved to minimize their length and may be outside or inside the pole areas.    The width of coils and their configuration will be controlled by the magnet configuration and the number of coils in a pole pitch.

- 9 -

Considering now the six configurations illustrated, Figures 1A to 1D show variants of one preferred class, in which the coils have a central opening equal to a magnet width. Their connective parts are outside the pole areas; however, by extending the poles radially as shown by the areas ME in Figure 1A, the induced E.M.F. may be increased. In the case illustrated the increase is approximately 19%. Magnet poles and the parts of the coils within the interaction space are rectangular. Poles are $\frac{1}{2}$ pole pitch wide in all four cases.

The induced EMF is zero when magnets and coils are disengaged. This is efficient because conductor length is not wasted in producing opposing EMFs. The resulting waveform is triangular as illustrated, with RMS value $1/\sqrt{3}$.

Figures 1A and 1B show this configuration in two forms. It will be noted that only half the available periphery is occupied by conductors. The other half may be used to accomodate a second set of coils. The output of this set will be 90° out of phase with relation to the first set, and will therefore be connected to a separate load, which will be acceptable in some cases. Figures 1C and 1D show configurations resulting from the doubling of the coil arrangements shown in Figures 1A and 1B respectively, the respective coils C1 and C2 producing triangular waveforms A and B which have a phase difference of 90°.

Figures 1E and 1F show variants of a second preferred class, in which the coils have substantially no central opening, but are rectangular in the interaction space as before. In Figure 1E the magnet poles M1 are shaped as double sinusoids, their exact shape being determined by experiment to produce a true sinusoidal variation in intensity of magnetic flux at the centre of the air gap. There are two coils per pole pitch. The output waveform is a sine wave, RMS value $1/\sqrt{2}$.

In Figure 1F the magnet poles M2 are rectangular and 1/3 pole pitch wide; there are three coils C4, C5 and C6 separately connected in each pole pitch. The three output waveforms A, B and C respectively are flat-topped linear shape as illustrated, the RMS value being $\sqrt{5}/3$. The three outputs are at $120^{\circ}$ phase difference, thus constituting a true three-phase output.

Although not as efficient as the variants shown in Figures 1A to 1D, these latter two have offsetting advantages; sinewave output in Figure 1E and three-phase output in Figure 1F. The latter would be particularly useful in motor applications.

To illustrate the characteristics of these variants, the power output and watts output per kilo of copper have been calculated for a nominal 5kW machine running at 300 RPM, which is the maximum design speed, with 1kW of heat dissipated in the coils. This machine would be approximately 140 cm in diameter and weight about 190 kilos. The figures are expressed

- 11 -

as percentages of the maximum case.

| Figure | Power output | Watts per kilo |
|--------|--------------|----------------|
| 1A | 72 | 73 |
| 1B | 76 | 100 |
| 1C | 96 | 54 |
| 1D | 100 | 71 |
| 1E | 87 | 65 |
| 1F | 70 | 60. |

The 100% figures are: power output 5.2 kW; watts per kilo 211.

It will be observed that the variants shown in Figures 1C and 1D provide the best power output, which is to be expected as they have two sets of coils. The increase due to doubling is however limited to around 30% because the coils must have less turns to allow space for bending them into the air gap plane. It should also be noted that variant 1C is wasteful of copper; 1A is simplest; and 1B is economical. All six are otherwise comparable and the choice will depend on circumstances.

It will be appreciated that other variants are possible within the limitations of this invention. The six variants described above in connection with Figures 1A to 1F merely illustrate the possibilities.

Referring next to Figures 2 and 3, it will be seen that the electrical rotating machine is shaped like a disc, which is a characteristic form of the axial flux machines here described. The machine is supported on a base 10 which may be secured to the ground or other base member by bolts passing through bolt holes 12. The base 10 is provided with an upwardly extending support shaft 14 which is hollow at its lower end 14a. The upper solid end 14b of the shaft 14 carries bearings 16 and 18 which are interconnected by a hollow shaft 20 coaxial with the upper end 14b of the shaft 14.

A box girder rotor 22 comprises radial sections 24, upper and lower annular sections 25 and 26 and a circumferential section 28, all these sections being welded, bolted or riveted together to form an annular shaped box which tapers in the radial outward direction. Apertures 30 are provided in the sections 24, 25 and 26 being mainly for the purpose of lightening its construction, without reducing its rigidity. The box girder rotor 22 is secured to the hollow shaft 20, the whole rotor structure thus being capable of rotation about the shaft 14. A flange 21 is welded to annular member 23 which in turn is welded to the cover 42, 43 and this in turn is bolted to upper member 25 as the last assembly operation. Bolt holes 27 enable a corresponding flange on the end of the windmill drive shaft to be secured thereto by means of a flexible coupling.

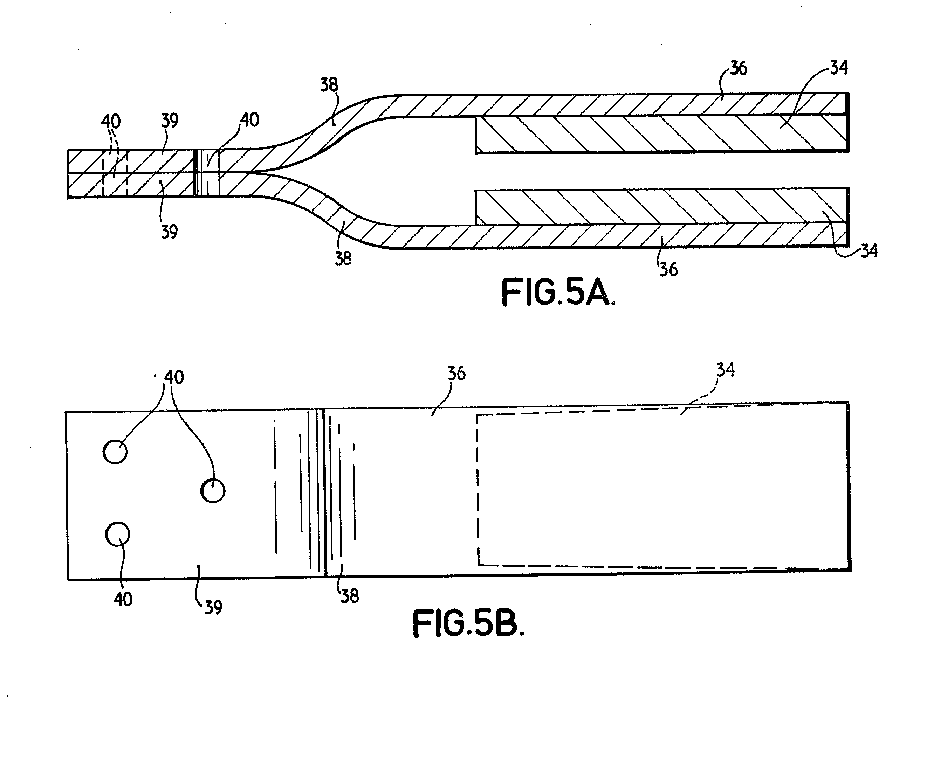

As will be seen from Figure 4, the box girder rotor carries 48 pairs of magnet assemblies 32 which are equi-spaced around its circumference. Referring also to Figures 5A and 5B, each magnet assembly comprises a pair of poles 34 formed from rectangular blocks of permanent magnetic material, in this case a magnetic material embedded in a plastics material, the blocks providing a uniform magnetic field.  The upper and lower permanent magnet blocks 34 are secured to respective pole carriers 36 each of which comprise a rectangular piece of high permeability soft iron.  Each carrier 36 is provided with an elongated 'S' shaped portion 38 whereby the ends 39 of a pair of carriers remote from the permanent magnets 34 are in contact with one another whilst the ends which carry the permanent magnets 34 are held in a fixed spaced relation so that the permanent magnets define an air-gap between opposing faces.  The two pieces 36 when attached together form a path for the magnetic flux which is closed except for the air-gap.  The polarity of the permanent magnets alternates around the rotor viz:  a first pair have north poles on their upper faces whilst adjacent pairs have south poles on their upper faces.  The ends 39 of a pair of carriers 36 are provided with three holes 40, which enable the permanent magnet pole pieces 32 to be clamped between a pair of flanges 29 by bolts 41, the flanges 29 being themselves secured to the inside of the circumferential section 28 of the box girder rotor 22 through apertures therein.

A cover 42 is secured to the top of upper section 25 of the box girder rotor 22 by bolts 45 and is extended over the pole pieces 32 to terminate in a

- 14 -

downwardly projecting circumferential portion 43. This cover carries the drive flange 21. The bolts 45 engage in threaded holes provided in tag members 31 welded to the upper annular section 25.

The coil assemblies which comprise the stator are supported on a circumferential ring member 44 which is supported by a dish-shaped member 47 strengthened by a plurality of external equi-spaced radially extending fins 46. The dish-shaped member 47 is secured to the hollow portion 14a of the shaft 14 by means of bolts 48.

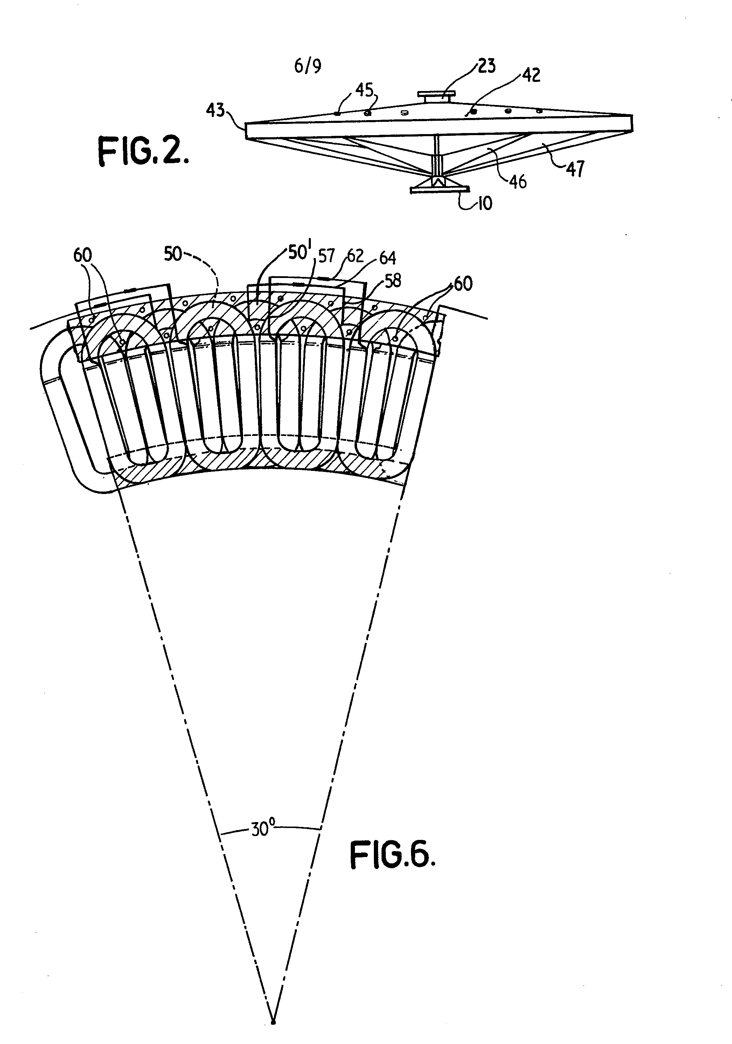

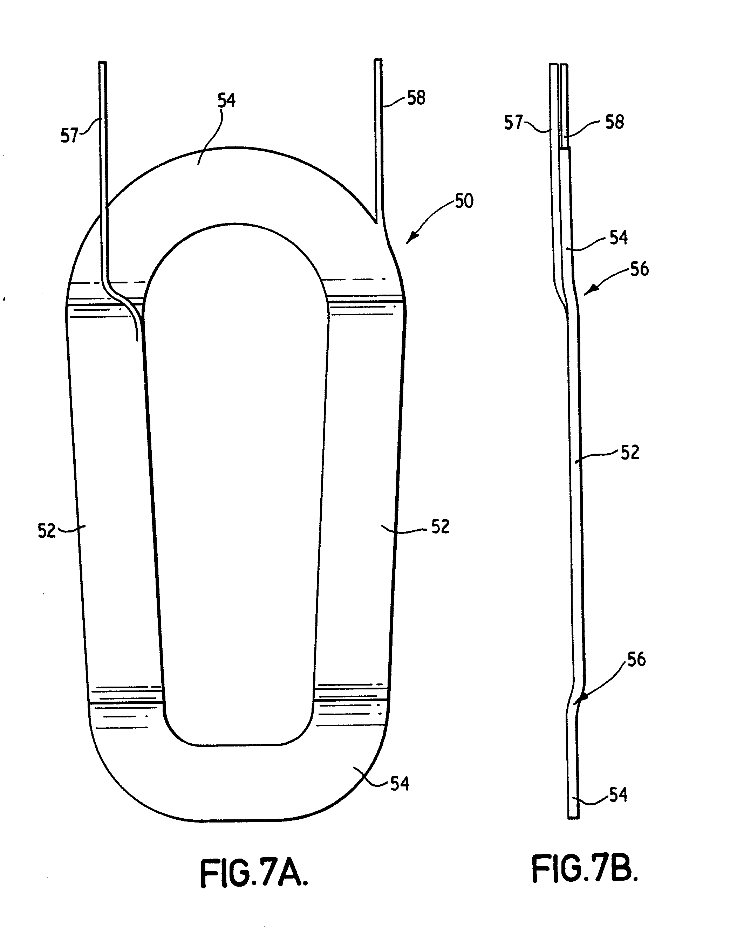

The stator coil units are shown in greater detail in Figures 6, 7A and 7B. Each coil unit 50 has the shape shown in Figure 6A, and comprises straight "active" strip-like conductor portions 52 and inner and outer curved "headspool" strip-like conductor portions 54. The parts of the "headspool" portions at the points where they merge into the straight "active" portions are slightly bent to form an elongated S as indicated at 56 in Figure 7B. Each coil unit 50 comprises a plurality of turns, 16 in the machine here described, the inner end of the coil being led out to form a conductor 57 and the outer end to form a conductor 58, these ends protruding through an outer ring of epoxy for the purpose of interconnection. These ends come from the part of the coil which is outermost from the centre of the machine. All coil units are identical.

Referring specifically to Figure 6, the stator contains two independently connected sets of coil units. The coil units 50 of one set are arranged side by side in one plane and the coil units 50' of the second set are arranged in the same plane but positioned the other way up so that the "active" portions 52 of both sets lie in the same plane whereas the headspool portions lie in adjacent planes on either side thereof, such positioning being permitted due to the elongated S portions 56 of the two sets of coil units. The coil units of the respective sets are connected as shown so that the current flow in the adjacent sides of two coil units in the same set is in the same direction. Inner conductors 57 and outer conductors 58 are interconnected as shown by conductors 62 and 64 respectively. The two sets are not connected, but provide two independent outputs. The "headspool" portions are held at their inner and outer ends by being encased in an epoxy resin, the outer headspool portions being clamped to the stator ring 44 by bolts 60.

Terminals 49 are located on the ring member 44 to enable the two sets of stator coils to be connected to external circuits.

Each set of coil units contains 48 such units arranged around the machine, each coil unit 50 subtending an angle of $7.5^{\circ}$. Four coils from each set (8 in all) are pre-formed into a sub-assembly as shown in Figure 6 for ease of assembly.

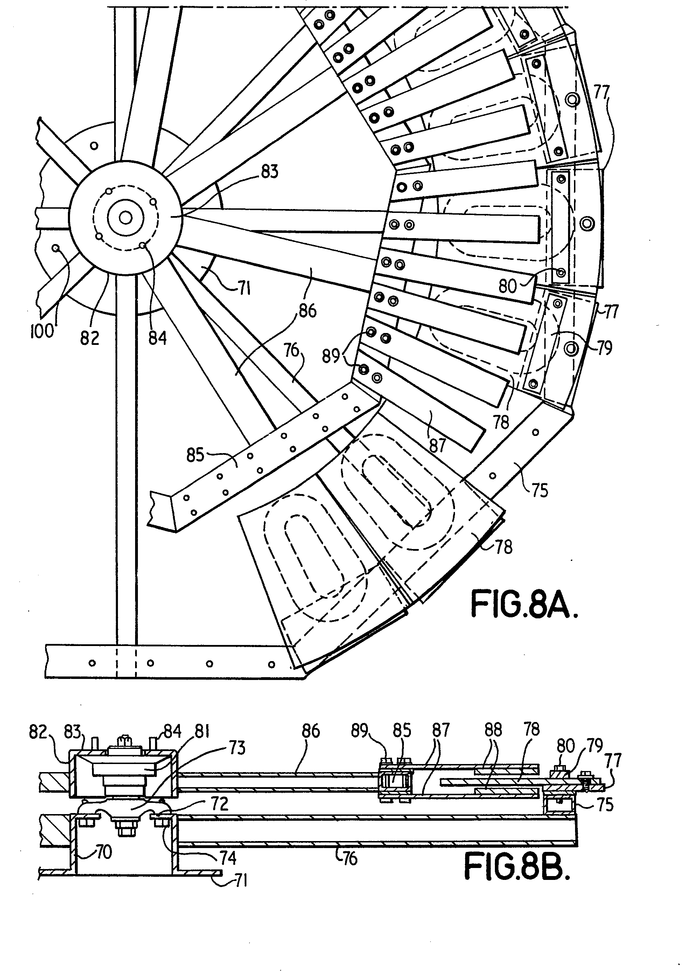

Referring now to the second embodiment disclosed in Figures 8A and 8B, it should be noted that in the cross sectional elevation view of Figure 8B, the stator and rotor structures have been slightly reoriented in order to show a cross sectional view of the supporting box girder structures.

The machine is supported on a base 70 of hollow cylindrical form having an outwardly directed peripheral flange 71 and its lower end provided with mounting bolt holes 100 and an inwardly directed peripheral flange 72 at its upper end. A centre bearing assembly 73 is bolted to the flange 72 by means of bolts 74 and supports the rotor structure.

The stator is an octagonal structure formed by eight straight sections 75 of rectangular steel box girder welded together around the base 70 and supported therefrom by means of eight struts 76 extending from the base 70 to the centres of the respective sections 75. All the straight members of this machine are fabricated from the same mild steel box section material, 5 x 3 cm by 3 mm thick.

Each section 75 of the octagonal stator carries three aluminium rectangular plates 77 which enable three respective stator coil assemblies 78 to be accurately mounted and aligned at angular intervals of 15° on an arc of a circle which extends through 45° and which act as heat sinks. An aluminium bar 79 ensures that the stator coil assemblies are held rigid in relation to the stator structure by means of bolts 80, and also acts as a heat sink.

The rotor structure is mounted on a hub 81 which is rotationally mounted upon the centre bearing assembly 73. The hub 81 carries a cylindrical member 82 having an inwardly projecting flange 83 at its upper end for bolting it to the upper surface of the hub 81 by means of bolts 84 which also act as drive bolts. The rotor is an octagonal structure formed by eight straight sections 85 of rectangular box girder welded together around a cylindrical member 82 and supported from it by means of eight box section struts 86 extending from the member 82 to the centres of the respective sections 85.

Each section 85 of the octagonal rotor carries six pairs of mild steel magnet carriers 87 the outer ends of which are arranged at angular intervals of 7.5$^o$, on an arc of a circle extending over 45$^o$. Ceramic permanent magnets 88 are mounted on the carriers 87 in similar manner to the first embodiment as shown in Figure 5A. The carriers 87 are bolted directly to the upper and lower sides of the box girder sections 85 by bolts 89.

A cover (not shown) in the form of two cups of a plastic material such as fibre-glass may be bolted to the members 76 and 86 respectively; the upper cup thus rotates with the rotor structure and encloses the stator structure as in the embodiment of Figures 2 to 7.

With regard to the construction of the magnets, the first embodiment shown in Figures 2 to 7 is designed to use plastic permanent magnets for ease of fabrication. The second embodiment shown in Figure 8 is designed to use ceramic magnets. The ceramic magnets have the advantage that their flux density is approximately 1.35 times that of the plastic magnets.

In both embodiments the magnets are fixed to the magnet carriers by means of a cold setting two part adhesive after suitable surface preparation.

In the case of the second embodiment, shown in Figure 8, less emphasis is placed on completing the magnetic circuit than in the first embodiment shown in Figures 2 to 7. The magnetic circuit is completed via the box girder section 85 in the second embodiment, whereas as can be seen from Figure 5A, the ends 39 of the carriers 36 are in direct contact.

The second embodiment also uses thicker coil structures which means that the air-gap is wider. This is acceptable owing to the increased flux density obtained by using ceramic magnets. The size of the conductors used in the second embodiment is 8 x 1 mm.

With regard to the coil assemblies used in the second embodiment disclosed in Figure 8, these are cast solid in insulating material of suitable strength and heat conductivity.

In the two previous embodiments the magnetic flux has been in the axial direction. In the third embodiment shown in Figures 9A and 9B, the magnetic flux is in the radial direction.   In this form the first part of the machine 102 carrying the magnet structures is in the form of a double walled cage having U-shaped supports 104 for carrying the magnets 106.   The magnets 106 are arranged to form twenty-four pairs of magnet assemblies arranged with alternating polarities both across the air gap and around each wall of the cage. The second part of the machine 108 is in the form of an upside-down cup which fits between the concentric walls of the cage and carries twelve stator coils 110 arranged according to the layout shown in Figure 1A.

The first and second parts 102 and 110 of the machine are mounted on respective shafts 112 and 114 and may be rotated relative to one another by an external coupling (not shown).

The machine shown in the third embodiment is cylindrical rather than disc shaped as compared with the machines described in the first two embodiments, and therefore has a smaller diameter.

The efficiency and power output of the machine shown in Figures 9A and 9B is comparable to those of the first two embodiments.

Whilst in the three embodiments of generators described above, the windings are fixed and the permanent magnets rotate above and below the windings, it would be possible to construct the machines such that the permanent magnets were fixed and the coil units constituting the windings rotated within the annular gap

- 20 -

defined by the permanent magnets.   This alternative construction has the advantage that electro-magnets could be more readily used, but the disadvantage that slip rings would have to be used to obtain the outputs from the windings.

A further possibility is to mount both the permanent magnets and the coil units for rotation in opposite directions.   Such a construction would of course mean having separate drives either from separate windmills or from the same windmill using two opposite sets of aerofoils or gears to obtain rotation in the other direction.   Whilst such a construction is obviously more complicated from the mechanical point of view, it does have the advantage that the overall efficiency of the system could be increased.

Whilst the above described machines are used as alternators, the same principle can be applied with equal  advantages to motors, and in fact the machines described above will operate with the same efficiency as motors, either in the synchronous mode if fed by single phase AC, or, with a commutator, as DC motors.   Similarly the three-phase alternator will become a true rotating field machine if fed with 3-phase AC and operate as a permanent magnet induction motor; the two phase machines described will also function in this way if the two windings are fed with two phase AC at $90^{\circ}$ phase difference, but not so efficiently.

As these machines have two or perhaps three windings it is practical to drive the magnet rotor using one winding and take an output from the other or others thus making a rotary converter. A variety of combinations is possible. The drive shaft may also be used to put power in or to extract it and this, together with the two or three electrical outputs, provides a three or four terminal power transfer device in which the common factor is the frequency (rate of rotation in the case of the drive shaft).

The three preferred embodiments described with reference to the drawings are particularly designed to be used as wind driven generators and have the following advantages:-

(a)   a high efficiency and good power output over a wide range of speeds and particularly at low speeds;

(b)   ease of rotation at low torque, thus enabling satisfactory operation in light breezes;

(c)   reasonably low manufacturing costs;

(d)   minimum maintenance requirement; and

(e)   easy adaption to a simple form of automatic load control .

- 22 -

CLAIMS.

1.        An electrical rotating machine having:
a first part (22, 85) carrying an even number of
functionally separate and identical magnet assemblies
(34, 88) arranged in equi-spaced relation around a
circumferential zone of a circle;   a second part
(47, 75) carrying an even number of functionally
separate and identical coil assemblies (50, 78)
similarly arranged around the circumferential zone of
a circle;   and means to rotate at least one part
relative to the other part; characterized in that:-

firstly, the magnet assemblies (32, 87)
each comprise:   two magnet poles (34, 88) separated
by an air gap, the pole surfaces of said magnet assemblies
all lying upon and defining a single annular volume,
the polarities of the magnet assemblies alternating
around the circle;   means (36, 85) to complete the
magnetic circuit between opposing pole surfaces;

secondly, the coil assemblies (50, 78)
each comprise:   a number of turns of strip metal wound
in a spiral manner with the major dimension of the
strips in contact to form a flat single layer coil, the
coils thus formed being encapsulated singly or in groups
in an insulating material to form rigid structures;
and means for fixing (60, 80) the coil assemblies to
the second part of the machine so that a substantial
major part of each coil lies within the air gap, the
coil assemblies being electrically connected in the
correct sense to provide one or more outputs; and

thirdly, the number of coil assemblies (50, 78) is equal to or greater than the number of pairs of magnet assemblies (32, 87), such that in each pole pitch the arrangement of coils is identical.

2.        An electrical rotating machine according to Claim 1, characterized in that the magnet structures are arranged such that the direction of the magnetic flux in the air gap is axial.

3.        An electrical rotating machine according to Claim 1, characterized in that the magnet structures are arranged such that the direction of the magnetic flux in the air gap is radial.

4.        An electrical rotating machine according to Claim 2 or 3, characterized in that the magnetic structures are substantially rectangular and elongated in the radial or axial directions respectively.

5.        An electrical rotating machine according to Claim 2 or 3, characterized in that the air gap faces of the magnet structures are shaped so as to produce a substantial sinusoidal flux distribution in the air gap.

6.        An electrical rotating machine according to any one of the preceding claims, characterized in that there are two separate sets of coil assemblies (50 and 50'), the two sets being superimposed so as to provide two separate equal electrical outputs in the case where the machine is used as a generator.

- 24 -

7.       An electrical rotating machine according to any one of the preceding claims, characterized in that the coil assemblies are each "whole" coils (C), the width of each active portion being equal to that of each magnet (M).

8.       An electrical rotating machine according to any one of the preceding claims 1 to 6, characterized in that the coil assemblies are each "half" coils (C1, C2), the width of one side of the active portion being equal to approximately one half the width of a magnet (M).

9.       An electrical rotating machine according to any one of the preceding claims 1 to 6, characterized in that the coils each have a central opening equal to the width of a magnet.

10.       An electrical rotating machine according to any one of the preceding claims 1 to 6, characterized in that the coils each have no substantial central opening.

1/9

FIG.1A.

FIG.1B.

FIG.1C.

FIG.1D.

FIG.1E.

FIG.1F.

# FIG.3.

# FIG.4.

0058791

FIG.5A.

FIG.5B.

6/9

FIG.2.

30°

FIG.6.

0058791

**FIG.7A.**

**FIG.7B.**

0058791

8/9

FIG.8A.

FIG.8B.

FIG.9A.

FIG.9B.

0058791

European Patent
Office

**EUROPEAN SEARCH REPORT**

Application number

EP 81 30 0780.4

| | **DOCUMENTS CONSIDERED TO·BE RELEVANT** | | | **CLASSIFICATION OF THE APPLICATION (Int. Cl.³)** |
|---|---|---|---|---|
| Category | Citation of document with indication, where appropriate, of relevant passages | Relevant to claim | | |
| X | US - A - 3 999 092 (E. WHITELEY)<br>* column 4, lines 19 to 50; fig. 1, 2 * | 1,2,4<br>5,7,9 | | H 02 K 21/24<br>H 02 K 21/12 |
| X | DE - C - 360 533 (H. KREBS et al.)<br>* complete document * | 1-5 | | |
| | GB - A - 1 165 091 (KIENZLE UHRENFABRI-KEN)<br>* page 2, lines 78 to 80 * | 6 | | **TECHNICAL FIELDS SEARCHED (Int. Cl.³)** |
| A | US - A - 3 320 454 (W. KOBER)<br>* column 4, line 1 to column 5, line 4 *<br>---- | | | H 02 K 21/00 |

**CATEGORY OF CITED DOCUMENTS**

X: particularly relevant
A: technological background
O: non-written disclosure  .
P: intermediate document
T: theory or principle underlying the invention
E: conflicting application
D: document cited in the application
L: citation for other reasons

&: member of the same patent family, corresponding document

| | The present search report has been drawn up for all claims | | |
|---|---|---|---|
| Place of search<br>Berlin | Date of completion of the search<br>06-10-1981 | Examiner<br>GESSNER | |

EPO Form 1503.1  06.78